Europäisches Patentamt

European Patent Office

Office européen des brevets

(11) Publication number: **0 018 797**
**A1**

(12) # EUROPEAN PATENT APPLICATION

(21) Application number: **80301359.8**

(51) Int. Cl.³: **A 01 M 21/04**
**B 05 B 11/06**

(22) Date of filing: **25.04.80**

(30) Priority: **27.04.79 AU 8561/79**

(43) Date of publication of application:
**12.11.80 Bulletin 30/23**

(84) Designated Contracting States:
**AT BE CH DE FR GB IT LI LU NL SE**

(71) Applicant: **Nye, Stanley**
**139 Gold Creek Road**
**Brookfield Queensland 4069(AU)**

(72) Inventor: **Nye, Stanley**
**139 Gold Creek Road**
**Brookfield Queensland 4069(AU)**

(74) Representative: **Woodward, John Calvin et al,**
**VENNER SHIPLEY & CO. Rugby Chambers 2 Rugby Street**
**London WC1N 3QU(GB)**

(54) **Liquid applying apparatus.**

(57) A hand-held weedicide or pesticide spraying apparatus including an elongate body (11) which defines a reservoir and on which is mounted a pump (14) and outlet valve (17). A manually operated plunger (15) is also mounted on the body (11) so that when the plunger (15) is depressed, the pump operates to spray liquid from the outlet valve (17). A cutting blade (18) may also be mounted to the body adjacent the outlet valve (17).

*FIG. 1.*

EP 0 018 797 A1

- 1 -

## LIQUID APPLYING APPARATUS

THIS INVENTION relates to improved apparatus for applying weedicide, pesticide or other liquid.

The present invention has been devised principally to provide weeding apparatus which will enable the chore of weeding to be carried out quickly and efficiently with minimum effort on the part of the gardener. The apparatus of the invention may also be used to apply pesticides in or around the home or elsewhere and also for the application of other liquids.

At present, weeding is achieved by physically removing the weeds or by spraying areas with a selective weed killer. Digging out weeds for the purpose of clearing a particular area of weeds is time consuming and strenuous while the simpler alternative of spraying to eradicate the weeds has the problem that it is difficult to control the area covered by the spray so that nearby plants, other than the weeds intended to be sprayed, may be covered by the weedicide and this is of course undesirable. Further, weedicide spray spread by wind drift may be injurious to the health if inhaled or if it contacts the eyes or exposed flesh.

The present invention has been devised to overcome the above disadvantages and to provide apparatus for applying liquids such as poisons which will be reliable and efficient in use, be extremely economical with respect to liquid use and which will enable a person to easily eradicate for example weeds from any selected area, for example, closely cultivated or open space areas, and pests.

With the foregoing and other objects in view, this invention resides broadly in an apparatus for applying liquids to a selected area such as weedicides to a weed including an elongate body adapted to be hand-held adjacent its upper end and a reservoir for said liquid and there being provided manually actuable control means associated with the upper end of said body for controlling an outlet valve associated with the lower end of said body and said reservoir, said reservoir being adapted to supply said liquid for passage to said selected area to be treated upon actuation of said outlet valve.

Preferably the manually actuable means for causing the liquid to flow through said outlet valve means includes pump means whereby the liquid may be ejected from said outlet valve means in the form of a spray, for example as a limited circular spray.

It is also preferable that the apparatus incorporate a cutting blade at one end thereof so that a weed to be poisoned may first be cut or bruised before the poison is applied to increase the efficiency and speed of killing.

In order that the invention may be more readily understood and put into practical effect, reference will now be made to the accompanying drawings, which illustrate various embodiments of the invention, and wherein:-

Fig. 1 is a diagrammatic view of one form of apparatus for weeding made in accordance with the present invention;

Fig. 2 is a view of one form of air pump assembly for the apparatus of Fig. 1;

Fig. 3 is a view of one form of dispensing assembly for the apparatus of Fig. 1;

Fig. 4 is a view of a stem assembly for the apparatus of Fig. 1;

Fig. 5 is a diagrammatic view of a modification of the apparatus of Fig. 1 wherein the air pump assembly comprises a bellows arrangement;

Fig. 6 is a diagrammatic view of a further embodiment of the invention;

Fig. 7 is an exploded view of a preferred form of pump assembly for the embodiment of Fig. 6.

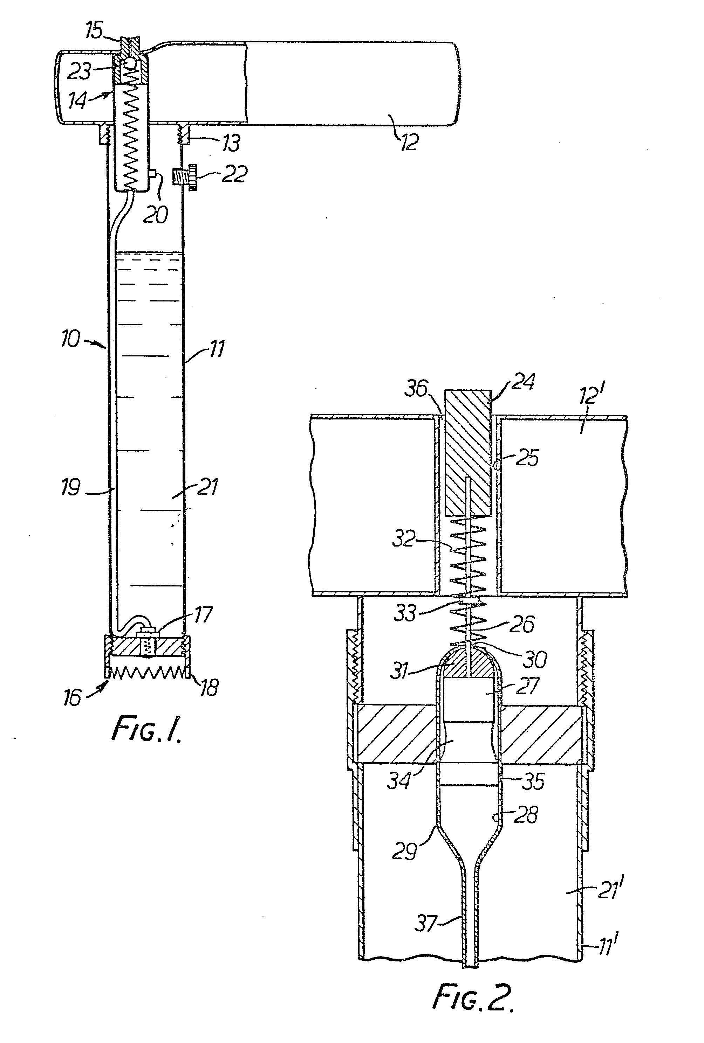

As shown in Fig. 1, the weeding apparatus 10 is similar in length and shape to a walking-stick and includes a tubular stem 11 and a handle assembly 12 extending at right angles thereto at the top of the tubular stem 11. The handle assembly 12 is provided with an integral screw-on cap 13 by which it may be secured to the upper end of the stem 11 and an air pump assembly 14 is supported within the handle assembly 12 and this pump assembly 14 has a finger operable plunger 15 extending upwardly from a recess in one end of the handle, the other end of which extends away to one side of the tubular stem 11.

The lower end of the stem 11 is sealed by a screw-on dispensing cap assembly 16 which is provided with a central non-return spring actuated valve 17 and a peripheral saw tooth or knife edged blade assembly 18 which is adapted to be forced into the heart of the weed foliage and/or stem system to cut or bruise same to enable weedicide ejected from the non-return valve 17 to enter the plant for a quick kill.

As shown, the air pump assembly 14 is provided with a first outlet interconnected with the non-return valve 17 via a tube 19 whereby air may be pumped to the spring loaded non-return valve 17 and a second outlet 20 through which air is introduced into the top of the hollow stem 11 to pressurise the liquid weedicide 21 contained in the stem 11. The tube 19 is provided with an S-bend at its lower end adjacent its connection with the non-return valve 17 and the tube 19 is apertured adjacent its lowest portion to enable liquid to be introduced into the tube for passage with air through the non-return valve 17.

The stem 11 is provided with a filler cap 22 and the air pump assembly 14 is provided with a ball 23 which is spring urged upwardly to engage sealably with an air intake apertured in the cap of the plunger 15. In use, thumb pressure on the cap of the plunger 15 blocks the air inlet aperture so that the air in the body of the pump may be compressed causing the interior of the stem 11 to be pressurised and air to be forced down the tube 19 through the non-return valve 17. This action causes air to pass through the non-return valve 17 with liquid introduced into the tube 19 through the aperture in the lower end thereof so that a fine spray of weedicide is emitted centrally from within the annular saw tooth or knife edged blade assembly 18 which has, prior to pressurisation of the device, been forced into engagement with the heart of a weed to ensure that the weedicide penetrates into the plant's central foliage and stem system.

When the thumb is lifted from the plunger cap, the reduction in pressure causes the non-return valve 17 to close and the ball 23 to move away from the air inlet aperture so that air is reintroduced into the air pump body through the aperture in the cap thereof so that the device is ready for poisoning the next weed. The weeding apparatus according to the above described embodiment may be used to direct and confine a controlled spray of weedicide to hard-to-get-at weeds in cracks and crevices and even to areas high above the head. Further varying amounts of weed killer liquid can be ejected by light or heavy touch of the thumb. Preferably the apparatus 10 is made of durable transparent plastic material to withstand normal wear and tear for a long period. As the device is fully sealed in its inoperative attitude, it may be stored in any attitude without fear of the contents leaking therefrom or conveniently it may be hung from a wall rack.

Referring to Fig. 2, there is shown a second form of an air pump assembly which includes a finger operable plunger 24 being mounted for reciprocating movement in a bore 25 in a handle assembly 12'. The plunger 24 is connected by a rod 26 to a piston 27 which is reciprocable in bore 28 in cylinder assembly 29. The cylinder assembly 29 has disposed at its top portion an aperture 30 which is sealingly closed by a portion 31 at the top end of the piston 27. Surrounding the rod 26 is a spring 32 positioned between the cylinder assembly 29 and the plunger 24 and biasing the plunger upwardly, the rod also including a stop 33 which may abut against the cylinder 29 to limit the travel of the plunger 24 and the piston 27.

The piston 27 is further provided with a cut-away or waisted portion 34 which constitutes an air passage and the cylinder assembly 29 is provided with an aperture 35 in the side wall thereof communicating with a reservoir 21'. In operation, when the plunger 24 is depressed, the portion 31 of the piston 27 moves away from the aperture 30 thus opening same. This allows the air within the reservoir to communicate with the outside atmosphere via the aperture 35, waisted portion 34 of the piston 27, the aperture 30 and a passage 36 between the plunger 24 and the bore 25 such that pressure on either side of the reservoir is equalised.

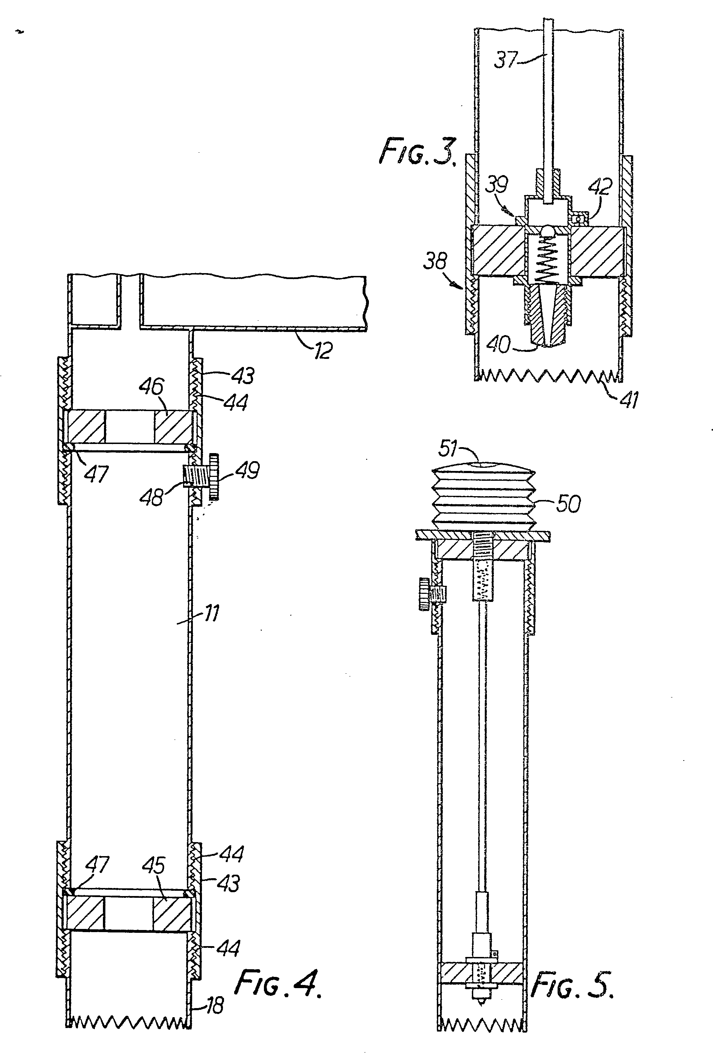

The lower end of the cylinder assembly 29 is connected to a tube 37 which tube leads to a valve and dispensing assembly at the bottom of a tubular stem 11'. As shown in Fig. 3, this assembly 38 includes a check valve assembly 39, a nozzle 40 and an annular blade 41 and operates in a similar fashion to the embodiment described with reference to Fig. 1, there also being provided a passageway 42 such that liquid may be introduced from the reservoir to the valve assembly 39.

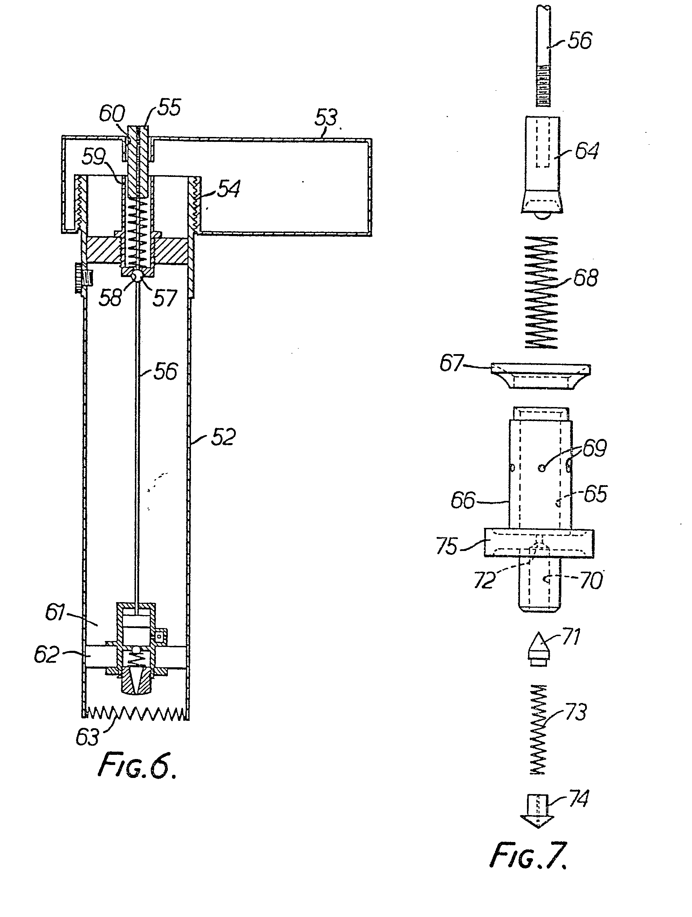

The construction of an embodiment of a housing or stem for a pump and dispensing assembly is shown in Fig. 4 wherein the tube 11, which may be metal, plastic or other suitable material, has arranged at each end, external sleeves 43, the upper one joining the tube 11 to the handle assembly 12 and the lower one joining the tube 11 to the annular tooth or knife edge blade assembly 18 preferably by screw threads 44. Arranged between the tooth or knife edge blade assembly 18 and the tube 11 is a base plate 45 in which the dispensing assembly is arranged whilst a top plate 46 for mounting of the pump is arranged between the top of the tube 11 and the handle assembly 12. Seals 47, which may be lip or O-ring seals, are arranged between the respective plates and the tube ends so that on tightening of the screw threads 44, sealing engagement is achieved. The housing or stem assembly also includes an aperture 48 which accommodates a filler cap 49 of convenient form.

Fig. 5 shows a further modification of the invention which operates in a similar fashion to the embodiment of Fig. 1 but includes a bellows or concertina air pump 50 and a floating air inlet ball or disc 51 rather than the plunger assembly 14 of Fig. 1.

A further embodiment of the invention is shown in Figs. 6 and 7 wherein the pump assembly, rather than being arranged at the handle end of the tube, is arranged at the lower end of the tube. Referring to Fig. 6, there is shown a poison containing tube 52 having a handle 53 mounted at one end thereof, by means of a screw thread 54. A plunger button 55 is mounted for reciprocatory movement in the handle 53 and is connected by a screw thread or other suitable means to a rod 56 which extends longitudinally of the tube 52. A ball 57 is mounted on the rod 56 and seals against a seat 58 in the end of a cylinder 59 such that on depressing the plunger button the ball 57 is lifted off its seat and air is able to be drawn into the apparatus via a passageway 60 which is constituted by a clearance between the plunger button 55 and the handle 53.

Arranged at the lower end of the tube 52 is a pump and valve assembly 61 mounted in a base plate 62, and a toothed or knife-edged blade 63. One embodiment of a pump and valve assembly is shown in Fig. 7, wherein the rod 56 is screw-threadedly connected to a piston 64, the piston 64 being mounted for reciprocating movement in a bore 65 in a chamber 66. Mounted at the upper part of the chamber 66 is a guide ring 67 which guides the piston into the bore 65 and arranged in the bore 65 is a return spring 68 which acts against the piston 64. A number of apertures 69 extend through the wall of the chamber 66 to the bore 65 to provide communication between the bore and the reservoir at the interior of the tube 52. The chamber 66 also includes a further bore 70 which communicates with the bore 65 and has mounted therein a check valve assembly including a needle 71 which is biased against a valve seat 72 by a biasing spring 73, which acts against a nozzle 74 which is fixedly mounted in the bore 70. The chamber 66 also includes a collar 75 which is either integral with the chamber 66 or a separate piece fixedly mounted thereto. The collar 75 constitutes a base plate which is fitted to the side wall of the tube 52 so as to mount the pump and valve assembly into the tube.

In operation, on upward movement of the piston 64, liquid is drawn into the bore 65 from the interior of the tube 52 via the apertures 69 and leakage does not occur from the nozzle 74 because the needle 71 is biased against seat 72. When the plunger 55 is depressed, rod 56 is moved downwardly causing the ball 57 to move away from the seat 58, which allows communication between the liquid in the tube 52 and the atmosphere via the passage 60. The piston 64 also moves downwardly closing off the apertures 69 and causing the liquid in the lower part of the bore 65 to force the needle valve 71 open to allow the passage of liquid through the nozzle 74 in the form of a fine spray.

In a further modification of the apparatus, the tubes 11, 11' or 52 may be drip-fed from a back pack carried by a worker such that the reservoir defined by the tube is continually replenished rather than refilling the tube at regular intervals.

While the above description relates to the preferred embodiment of the invention, the concept of the invention could be embodied in weeding apparatus of a very simple nature. For example, the handle could be formed as a squeeze bag or pedal. Alternatively, a drip feed action could be utilised in which case the drip would be controlled by pin inserts into an air inlet hole at the top of the housing and a liquid outlet hole at the base. The invention is also applicable to the spraying of pests in or around the home or elsewhere, the reservoir in this case containing pesticide. The apparatus then has the advantage that hard-to-get-at areas may be reached which makes it especially suitable for use by the aged or invalids.

As an example of the dimension of the apparatus, the overall length may be of the order of seventy-four centimetres, the diameter of the tube two centimetres, and the capacity of the reservoir 0.25 litre.

Of course, it will be realised that the above has been given by way of illustrative example only, and all such modifications and variations in constructional detail and design as would be apparent to persons skilled in the art are deemed to fall within the broad scope and ambit of the invention as is defined in the appended claims.

1.      Apparatus for applying liquids to a selected area such as weedicides to a weed, including an elongate body adapted to be hand-held adjacent its upper end and a reservoir for said liquid, and there being provided manually actuated control means associated with the upper end of said body for controlling outlet valve means associated with the lower end of said body and said reservoir, said reservoir being adapted to supply said liquid for passage to the selected area to be treated upon actuation of said outlet valve means.

2.      An apparatus according to Claim 1, wherein said manually actuated control means includes pump means whereby said liquid may be ejected from said outlet valve means in the form of a spray.

3.      An apparatus according to Claim 2, wherein said pump means is an air pump assembly which is connected via tube means to said outlet valve means such that on actuation thereof, said outlet valve means is opened to dispense said liquid therefrom.

4.      An apparatus according to Claim 3, wherein aperture means communicating with said reservoir and said outlet valve means are arranged adjacent said outlet valve means such that said liquid passes therethrough on actuation of said control means.

5.      An apparatus according to any one of Claims 3 or 4 wherein on actuation of said pump assembly, pressure is also applied to said reservoir, or said reservoir is communicated with the atmosphere.

6.      An apparatus according to Claim 2, wherein

0018797

said pump means is arranged at the lower end of said body and is associated with said outlet valve, said pump means being actuated by said control means.

7. An apparatus according to Claim 6, wherein said pump means includes a piston and cylinder assembly communicating with said reservoir and said control means includes a shaft connected at one end to said piston and at its other end to a manually depressible plunger arranged at the upper end of said body.

8. An apparatus according to any one of the preceding claims, wherein blade means are arranged adjacent said outlet valve means such that a weed to be treated may be cut or bruised before said control means is actuated.

9. An apparatus according to any one of the preceding claims, wherein said body is tubular and defines said reservoir.

10. An apparatus as hereinbefore described with reference to Figs. 1 to 5 or Figs. 6 and 7.

0018797

FIG.I.

FIG.2.

FIG.3.

FIG.4.

FIG.5.

FIG.6.

FIG.7.

European Patent Office

**EUROPEAN SEARCH REPORT**

0018797

Application number

EP 80 30 1359

| | DOCUMENTS CONSIDERED TO BE RELEVANT | | CLASSIFICATION OF THE APPLICATION (Int. Cl. ¹) |
|---|---|---|---|
| Category | Citation of document with indication, where appropriate, of relevant passages | Relevant to claim | |
| X | US - A - 2 841 923 (WILLIAM DICKI-SON) <br> * Whole document * | 1,2,4, 6,7, 9,10 | A 01 M  21/04 <br> B 05 B  11/06 |
| | -- | | |
| | US - A - 1 567 743 (DON E. Mac DONALD) <br> * Whole document * | 1,2,3, 7 | |
| | -- | | TECHNICAL FIELDS SEARCHED (Int.Cl. ³) |
| | FR - A - 441 939 (ANATOLE DUMAINE) <br> * Whole document * | 1,2,6, 7,8,9 | A 01 M <br> B 05 B |
| | -- | | |
| | AU - B - 65 146/65 (SYDNEY ERNEST BENTIVOGLIO) <br> * Whole document * | 1,8,9 | |
| | -- | | |
| | US - A - 3 077 166 (CHRISTOPHER DELP) <br> * Column 2, lines 53-68 * | 1,8 | |
| | -- | | |
| A | US - A - 2 579 909 (HARRY A. DIEFFENBACH) | | |
| A | BE - A - 346 087 (DONALDSON COMP. INC.) | | |
| A | GB - A - 881 385 (PAUL OLIVER ESMAY) | | |
| A | DE - A - 831 784 (ALOYS GELZHAUSER) | | |
| | ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> The Hague | Date of completion of the search <br> 30-07-1980 | Examiner <br> DE RUITER | |

EPO Form 1503.1  06.78